# EUROPÄISCHE PATENTANMELDUNG

(11) **EP 2 037 562 A2**
(43) Veröffentlichungstag der Anmeldung: **18.03.2009**
(21) Anmeldenummer: 08016389.2
(22) Anmeldetag: 17.09.2008
(51) Int. Cl.: H02M 7/483

(54) **Vorrichtung zur Versorgung mehrerer elektrischer mehrphasiger Lasten**

(30) Priorität: 17.09.2007 DE 102007044226
(71) Anmelder: Liebherr-Aerospace Lindenberg GmbH, 88161 Lindenberg/Allgäu (DE)
(72) Erfinder: Immler, Thomas, Dipl.-Ing. (FH), 88175 Scheidegg (DE)
(74) Vertreter: Herrmann, Uwe

(57) **Zusammenfassung**

Die vorliegende Erfindung betrifft eine Vorrichtung zur Versorgung mehrerer elektrischer mehrphasiger Lasten, wobei die Vorrichtung wenigstens einen Multilevel-Pulswechselrichter aufweist, der wenigstens einen dezidierten und wenigstens einen multiplen Halbleiterschalter umfasst.

## Beschreibung

Die vorliegende Erfindung betrifft eine Vorrichtung zur Versorgung mehrerer elektrischer mehrphasiger Lasten.

Aus dem Stand der Technik ist es bekannt, mehrphasige Lasten, wie beispielsweise Drehstrommotoren über Wechselrichter anzusteuern.

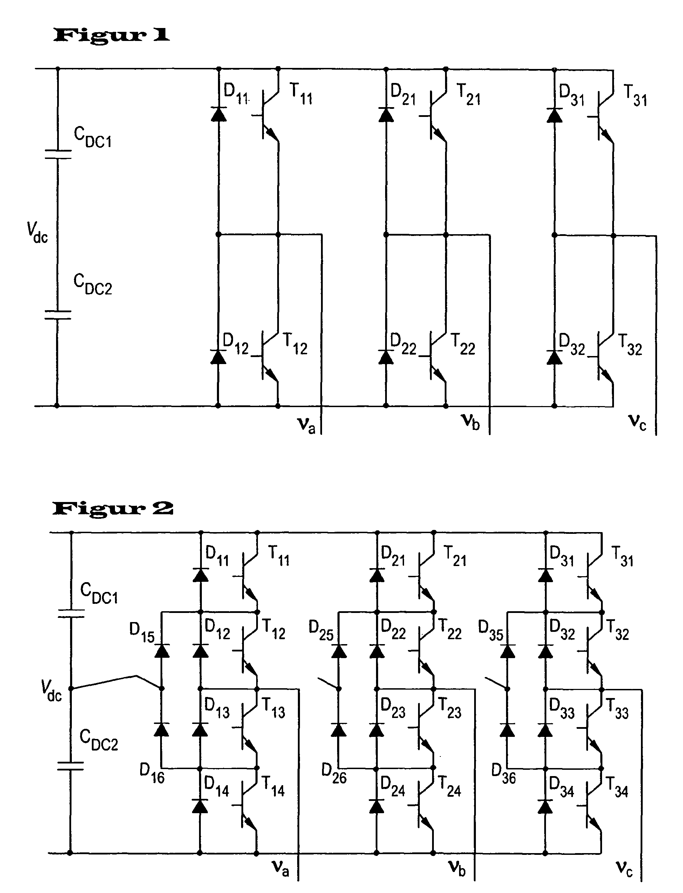

Figur 1 zeigt eine aus dem Stand der Technik bekannte Pulswechselrichterstruktur.

Aus dem Stand der Technik sind des weiteren sogenannte Multilevel-Pulswechselrichter bekannt. Eine Pulswechselrichterstruktur in Form eines Multilevel-Pulswechselrichters erlaubt es, mehrere Spannungsvektoren an einer Maschine anzulegen. Figur 2 zeigt eine Standard-Multilevel-Pulswechselrichterstruktur in der "diode clamped"-Ausführung.

Die in Figur 2 dargestellte Multilevel Topologie hat gewisse Vorteile gegenüber herkömmlichen Inverter Schaltungen. Diese bestehen unter anderem darin, dass mehrere Spannungsvektoren an die Last anlegbar sind, wodurch eine Reduzierung des Stromrippels und damit des Filteraufwandes erzielt werden kann. Des weiteren ermöglicht die Multilevelstruktur eine Reduzierung der Verlustleistung durch geeignete Wahl der Halbleiterbauelemente sowie eine Redundanz durch Serienschaltung der Halbleiterbauelemente. Gegenüber herkömmlichen aus dem Stand der Technik bekannten Inverterschaltungen sind als weitere Vorteile eine Reduzierung von Gewicht und Kosten, eine Reduzierung des Filteraufwandes und eine Reduzierung des Stromrippels bei niederinduktiven Maschinen zu sehen.

Der vorliegenden Erfindung liegt die Aufgabe zugrunde, eine Vorrichtung zur Versorgung mehrerer elektrischer mehrphasiger Lasten dahingehend weiterzubilden, dass der Schaltungsaufwand gegenüber vorbekannten Invertern reduziert wird und/oder dass die Fehlertoleranz und damit die Zuverlässigkeit der Anordnung erhöht wird.

Diese Aufgabe wird durch eine Vorrichtung mit den Merkmalen des Anspruchs 1 gelöst. Danach ist vorgesehen, dass die Vorrichtung wenigstens einen Multilevel-Pulswechselrichter aufweist, der wenigstens einen dezidierten und wenigstens einen multiplen Halbleiterschalter umfasst. Unter einem dezidierten Halbleiterschalter ist im Rahmen der vorliegenden Erfindung zu verstehen, dass der Schalter bzw. die den Schalter umfassende Schalterkonfiguration ausschließlich (dezidiert) für die Ansteuerung eines Phasenzweiges einer der mehrphasigen Lasten verwendet wird. Demgegenüber ist unter einem multiplen Halbleiterschalter zu verstehen, dass dieser zur Ansteuerung von mehreren Phasen dient, d.h. beispielsweise zur Ansteuerung zweier Phasenzweige unterschiedlicher mehrphasiger Lasten verwendet wird.

Die Schalterkonfiguration kann beispielsweise in Form einer Halbbrücke ausgeführt sein.

Die Steuerung der elektrischen mehrphasigen Lasten kann mittels einer gemeinsamen Steuereinheit oder auch Steuerlogik erfolgen.

Vorzugsweise ist der Pulswechselrichter derart ausgestaltet, dass zwei oder mehr als zwei Spannungslevel an die Lasten angelegt werden können.

In einer bevorzugten Ausgestaltung der Erfindung ist vorgesehen, dass der oder die multiplen Halbleiterschalter auf einem höheren Level des Pulswechselrichters angeordnet sind als der oder die dezidierten Halbleiterschalter.

Beispielsweise ist es denkbar, dass der wenigstens eine dezidierte Halbleiterschalter auf dem innersten Level des Multilevel-Pulswechselrichters angeordnet ist. Denkbar ist es somit beispielsweise, dass die unterste Spannungsebene (innere Spannungsebene) über dezidierte Halbleiterschalter mit der Last verbunden ist und somit jede Lastphase vorzugsweise über eine dezidierte Schalterkonfiguration mit der untersten Spannungsebene verbunden ist. In einer bevorzugten Ausgestaltung der Erfindung ist somit vorgesehen, dass der Multilevel-Pulswechselrichter pro Phasenzweig für die innersten Level in Form einer Schalterkonfiguration angeordnete Halbleiterschalter aufweist, die derart angeordnet ist/sind, dass sie ausschließlich für die Ansteuerung eines Phasenzweiges verwendbar sind.

In weiterer Ausgestaltung der Erfindung ist vorgesehen, dass der Multilevel-Pulswechselrichter Halbleiterschalter eines höheren Levels als den innersten Levels aufweist, wobei die Halbleiterschalter des höheren Levels derart angeordnet sind, dass für die Ansteuerung mehrerer Phasenzweige verwendbar sind. Vorzugsweise ist vorgesehen, dass ein multipler Halbleiterschalter derart angeordnet ist, dass er die Ansteuerung von Phasenzweigen unterschiedlicher Lasten vornimmt. Denkbar ist es beispielsweise, dass die multiplen Halbleiterschalter jeweils für die Ansteuerung zweier Phasenzweige verwendet werden.

Das erfindungsgemäße Prinzip von dezidierten und multiplen Halbleiterschaltern lässt sich auf eine beliebige Anzahl von Lasten, Phasen und Leveln erweitern und ist somit ausdrücklich nicht etwa auf drei oder vier Phasen und zwei Level beschränkt.

In weiterer Ausgestaltung der Erfindung ist vorgesehen, dass es sich bei dem höheren Level um den auf den innersten Level folgenden Level handelt. Denkbar ist es somit, dass die nächst höhere(n) Spannungsebene(n) über gemeinsam genutzte Halbleiterschalter mit der/den nächsten Spannungsebene(n) verbunden ist/sind.

In einem Beispiel kann der Multilevel-Pulswechselrichter somit derart ausgeführt sein, dass mehrere Spannungsebenen an die Lasten anlegbar sind. Dabei kann eine unterste Spannungsebene existieren und der Multilevel-Pulswechselrichter kann derart ausgeführt sein, dass die unterste Spannungsebene an den dezidierten Halbleiterschaltern anliegt, während eine oder mehrere höhere Spannungsebenen an dem oder den multiplen Halbleiterschaltern anliegt.

Denkbar ist es, dass eine oder mehrere Spannungsebenen existieren, die an dezidierten Halbleiterschaltern anliegen sowie eine oder mehrere Spannungsebenen, die an mulitplen Halbleiterschaltern anliegen.

Weiterhin kann vorgesehen sein, dass die Steuereinheit oder Steuerlogik derart ausgeführt ist, dass die Ansteuerung der dezidierten Halbleiterschalter sequentiell erfolgt. Ebenso ist es denkbar, dass die Steuereinheit oder Steuerlogik derart ausgeführt ist, dass die Ansteuerung der dezidierten Halbleiterschalter simultan erfolgt.

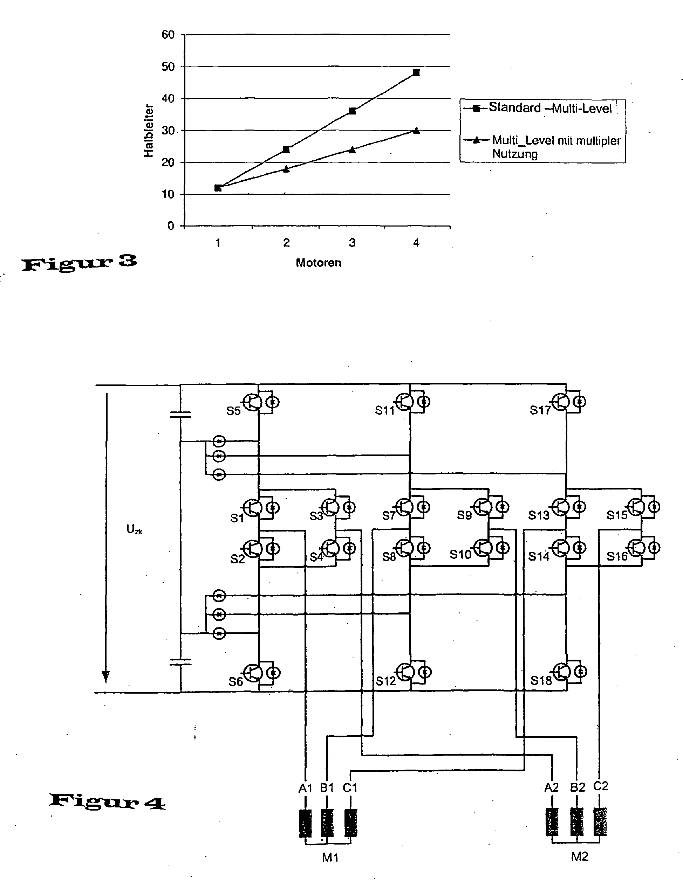

Durch die erfindungsgemäße Multilevel-Topologie lassen sich die Vorteile einer Multilevel-Anordnung für mehrere mehrphasige Lasten, wie beispielsweise Drehstrommotoren, mit einer reduzierten Anzahl an Halbleiterschaltern nutzen. Figur 3 zeigt die Verringerung der Anzahl der Halbleiterschalter in Abhängigkeit der Anzahl der Motoren für den Fall eines aus dem Stand der Technik bekannten Standard-Multilevel-Pulswechselrichters (obere Linie) sowie für den Multilevel-Pulswechselrichter gemäß der vorliegenden Erfindung (untere Linie).

Im Vergleich zu zwei getrennt aufgebauten Multilevel-Inwertern lässt sich somit die Anzahl der Halbleiterschalter erfindungsgemäß deutlich reduzieren.

Die vorliegende Erfindung betrifft des weiteren ein System mit einer Vorrichtung nach einem der vorhergehenden Ansprüche sowie mit einer oder mehreren mit der Vorrichtung in Verbindung stehenden elektrischen mehrphasigen Lasten. Bei den elektrischen mehrphasigen Lasten kann es sich um elektrische Maschinen, insbesondere um Elektromotoren handelt.

Denkbar ist es beispielsweise, dass es sich bei den Elektromotoren um solche zum Betrieb eines Landeklappenantriebes und/oder Fahrwerksantriebes eines Flugzeuges handelt.

Die Erfindung betrifft schließlich ein Flugzeug mit einer oder mehreren Vorrichtungen gemäß einem der Ansprüche 1 bis 11 und/oder mit einem oder mehreren Systemen gemäß einem der Ansprüche 12 bis 14.

Weitere Einzelheiten und Vorteile werden anhand eines in der Zeichnung dargestellten Ausführungsbeispiels näher erläutert. Es zeigen:
- Figur 1:: eine Standardwechselrichterstruktur,
- Figur 2:: eine Standard-Multilevel-Wechselrichterstruktur,
- Figur 3:: den Vergleich einer Standard-Multilevel-Pulswechselrichterstruktur mit einer Multilevel-Pulswechselrichterstruktur gemäß der vorliegenden Erfindung,
- Figur 4:: eine Multilevel-Pulswechselrichterstruktur gemäß der vorliegenden Erfindung mit dreiphasigen Lasten und
- Figur 5:: eine Multilevel-Pulswechselrichterstruktur gemäß der vorliegenden Erfindung mit vierphasigen Lasten.

Figur 4 zeigt eine erweiterte Multilevel-Pulswechselrichtertopologie gemäß der vorliegenden Erfindung.

Dargestellt ist die Struktur anhand eines erfindungsgemäßen Drei-Level diodeclamped Dreiphasen-Pulswechselumrichters für zwei dreiphasige Lasten M1 und M2.

Wie dies aus Figur 4 hervorgeht, wird pro Phasenzweig (A1, A2, B1, B2, C1, C2) für die innersten Level eine Schalterkonfiguration verwendet. Beispielsweise wird für den Phasenzweig A1 die Schalterkonfiguration bestehend aus den Halbleiterschaltern S1 und S2 verwendet. Diese Schalterkonfiguration bzw. deren Halbleiterschalter S1, S2 ist/sind dezidiert, da sie nur für die Ansteuerung des Phasenzweiges A1 der Last M1 verwendet wird.

Entsprechendes gilt für die Schalterkonfigurationen mit den Schaltern S3, S4; S7, S8; S9, S10; S13, S14; S15, S16, die jeweils für einen der Phasenzweige A2; B1; B2; C1; C2 der zwei dargestellten Lasten M1 und M2 verwendet werden.

Wie dies des weiteren aus Figur 4 hervorgeht, dienen die Schalter des nächstoberen Levels, beispielsweise die Schalter S5 und S6 für die Ansteuerung mehrerer Phasenzweige. In dem hier dargestellten Ausführungsbeispiel dienen die Schalter S5 und S6 zur Ansteuerung der Phasenzweige A1 und A2 gemeinsam. Es handelt sich somit um multiple Halbleiterschalter im Sinne der vorliegenden Erfindung, die zur Ansteuerung mehrerer Phasezweige der beiden dargestellten Lasten dienen.

Die Ansteuerung der Phasenzweige kann gleichzeitig oder auch zeitlich nacheinander durch ein geeignetes Ansteuerverfahren erfolgen.

Wie bereits oben ausgeführt, läßt sich das in Figur 4 dargestellte erfindungsgemäße Prinzip auf eine beliebige Anzahl von Lasten, Phasen und Leveln erweitern. Dabei ist die Verbindung zwischen den verschiedenen Spannungsebenen wie diodeclamped, capacitor-clamped, Kaskaden, etc. unerheblich. Sämtliche denkbare Arten der verschiedenen Verbindungen sind von der vorliegenden Erfindung erfaßt.

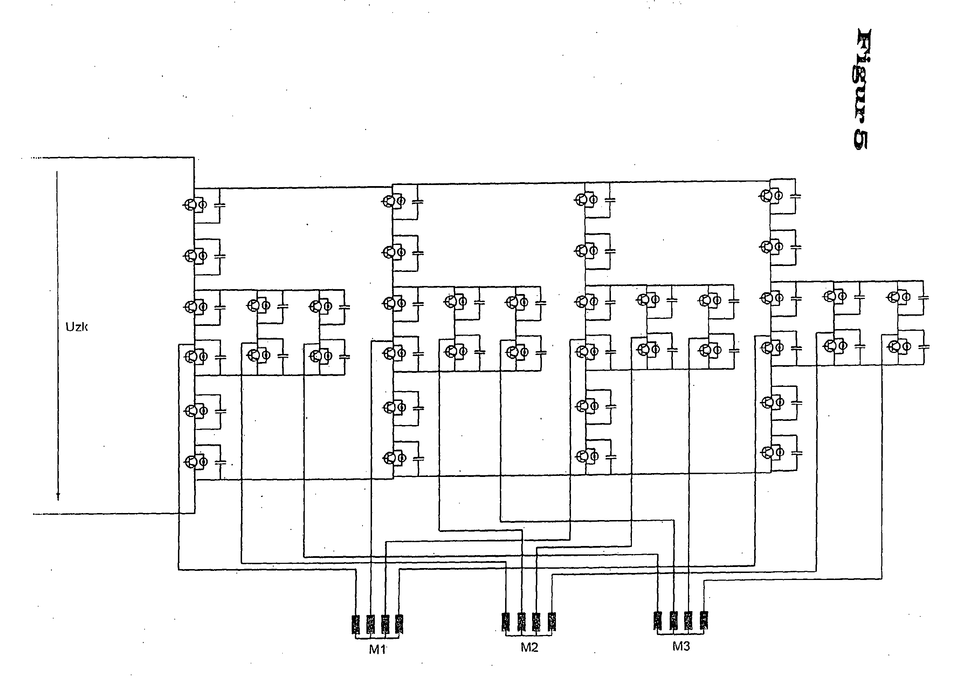

Figur 5 zeigt eine Anordnung gemäß der vorliegenden Erfindung, bei der vierphasige Lasten M1, M2 und M3 versorgt werden. Dargestellt ist ein Vier-Level, VierPhasen capacitor-clamped Multilevel Inverter für drei vierphasige Lasten M1, M2 und M3. In dem in Figur 5 dargestellten Ausführungsbeispiel werden drei vierphasige Motoren angesteuert. Das Beispiel gemäß Figur 5 zeigt exemplarisch, wie das der vorliegenden Erfindung zugrunde liegende Prinzip beliebig erweiterbar ist.

Wie oben ausgeführt, lassen sich durch die erfindungsgemäße Topologie eines Multilevel-Pulswechselrichters die Vorteile einer Multilevelanordnung für mehrere Lasten wie beispielsweise Motoren mit einer reduzierten Anzahl an Halbleiterschaltern nutzen.

## Patentansprüche

1. Vorrichtung zur Versorgung mehrerer elektrischer mehrphasiger Lasten, **dadurch gekennzeichnet, dass** die Vorrichtung wenigstens einen Multilevel-Pulswechselrichter aufweist, der wenigstens einen dezidierten und wenigstens einen multiplen Halbleiterschalter umfasst.

2. Vorrichtung nach Anspruch 1, **dadurch gekennzeichnet, dass** der oder die multiplen Halbleiterschalter auf einem höheren Level des Multilevel-Pulswechselrichters angeordnet sind als der oder die dezidierten Halbleiterschalter.

3. Vorrichtung nach Anspruch 2, **dadurch gekennzeichnet, dass** der oder die dezidierten Halbleiterschalter auf dem innersten Level des Multilevel-Pulswechselrichters angeordnet sind.

4. Vorrichtung nach einem der vorhergehenden Ansprüche, **dadurch gekennzeichnet, dass** der Multilevel-Pulswechselrichter in Form einer Schalterkonfiguration angeordnete Halbleiterschalter aufweist, wobei die Halbbrücke derart angeordnet ist, dass sie ausschließlich für die Ansteuerung eines Phasenzweiges einer Last verwendbar ist.

5. Vorrichtung nach Anspruch 4, **dadurch gekennzeichnet, dass** die Halbbrücke auf dem innersten Level des Multilevel-Pulswechselrichters angeordnet ist.

6. Vorrichtung nach Anspruch 4 oder 5, **dadurch gekennzeichnet, dass** die Schalterkonfiguration in Form einer Halbbrücke ausgeführt ist.

7. Vorrichtung nach einem der vorhergehenden Ansprüche, **dadurch gekennzeichnet, dass** der Multilevel-Pulswechselrichter Halbleiterschalter eines höheren als den innersten Levels aufweist, wobei die Halbleiterschalter des höheren Levels derart angeordnet sind, dass sie für die Ansteuerung mehrerer Phasenzweige verwendbar sind.

8. Vorrichtung nach Anspruch 7, **dadurch gekennzeichnet, dass** es sich bei dem höheren Level um den auf den innersten Level folgenden Level handelt.

9. Vorrichtung nach einem der vorhergehenden Ansprüche, **dadurch gekennzeichnet, dass** eine gemeinsame Steuereinheit oder Steuerlogik vorgesehen ist, mittels derer die Steuerung der elektrischen mehrphasigen Lasten erfolgt.

10. Vorrichtung nach einem der vorhergehenden Ansprüche, **dadurch gekennzeichnet, dass** eine Steuereinheit oder Steuerlogik vorgesehen ist, die derart ausgeführt ist, dass die Ansteuerung der dezidierten Halbleiterschalter sequentiell erfolgt.

11. Vorrichtung nach einem der vorhergehenden Ansprüche, **dadurch gekennzeichnet, dass** eine Steuereinheit oder Steuerlogik vorgesehen ist, die derart ausgeführt ist, dass die Ansteuerung der dezidierten Halbleiterschalter simultan erfolgt.

12. System mit einer Vorrichtung nach einem der vorhergehenden Ansprüche sowie mit mehreren, mit der Vorrichtung in Verbindung stehenden elektrischen mehrphasigen Lasten.

13. System nach Anspruch 12, **dadurch gekennzeichnet, dass** es sich bei dem elektrischen mehrphasigen Lasten um elektrische Maschinen, insbesondere um Elektromotoren handelt.

14. System nach Anspruch 13, **dadurch gekennzeichnet, dass** es sich bei den Elektromotoren um Elektromotoren zum Landeklappenantrieb eines Flugzeuges und/oder zum Fahrwerksantrieb eines Flugzeuges handelt.

15. Flugzeug mit einer oder mehreren Vorrichtungen gemäß einem der Ansprüche 1 bis 11 und/oder mit einem oder mehreren Systemen gemäß einem der Ansprüche 12 bis 14.
